# EUROPÄISCHE PATENTSCHRIFT

(11) **EP 3 672 858 B1**
(45) Veröffentlichungstag und Bekanntmachung des Hinweises auf die Patenterteilung: **06.07.2022**
(21) Anmeldenummer: 18725176.4
(22) Anmeldetag: 15.05.2018
(51) Int. Cl.: B61F 5/10, B60G 11/27, F16F 9/05

(54) **LUFTFEDERSYSTEM FÜR EIN SCHIENENFAHRZEUG**
AIR SUSPENSION SYSTEM FOR A RAIL VEHICLE
SYSTÈME D'AMORTISSEUR PNEUMATIQUE POUR UN VÉHICULE FERROVIAIRE

(30) Priorität: 21.08.2017 DE 102017214491
(43) Veröffentlichungstag der Anmeldung: 01.07.2020
(73) Patentinhaber: ContiTech Luftfedersysteme GmbH, 30165 Hannover (DE)
(72) Erfinder: KRANZ, Harald, 31008 Elze (DE)
(74) Vertreter: Continental Corporation
(86) Internationale Anmeldenummer: PCT/EP2018/062426
(87) Internationale Veröffentlichungsnummer: WO 2019/037902

(56) Entgegenhaltungen:
- DE-A1-102005 024 190
- DE-A1-102007 050 187
- DE-U1-202011 110 308
- FR-A1- 2 117 872

## Beschreibung

Die Erfindung betrifft ein Luftfedersystem für ein Schienenfahrzeug, angeordnet als Sekundärfedersystem zwischen einem Wagenkasten und einem Fahrwerk bzw. Fahrgestell, mit einem ein Federvolumen bildenden Arbeits- oder Druckraum, welcher von einem karosserieseitigem Luftfederdeckel, einer fahrwerkseitiger Felge und einem zwischen Luftfederdeckel und Felge angeordnetem Luftfederbalg begrenzt ist, wobei im Luftfederdeckel ein mit dem Arbeits- oder Druckraum zusammenwirkend verbindbares Zusatzvolumen ausgebildet ist.

Der Arbeits- oder Druckraum ist also zwischen Luftfederdeckel, der so genannten Oberplatte, und fahrwerkseitiger Felge angeordnet. Der Luftfederdeckel bzw. die Oberplatte steht mit dem Wagenkasten in Verbindung.

Im normalen Betriebszustand eines Luftfedersystems wird das Zusatzvolumen verwendet, um die Kennung der Federung zu verändern und damit eine komfortable "weichere" Federung einzustellen.

Solche Federsysteme sind für Schienenfahrzeuge bekannt. Die Luftfederung wirkt im Betriebszustand zusammen in einer Reihenschaltung mit einer Zusatzfeder aus elastomerem Werkstoff, vorzugsweise aus Gummi. Darüberhinaus ist oft noch eine Notfeder aus elastomerem Werkstoff innerhalb des Arbeits- oder Druckraums vorgesehen, welche zwischen Karosserie bzw. Wagenkasten und Fahrwerk bzw. Fahrgestell oder Fahrschemel des Fahrzeuges so angeordnet ist, dass bei einem Ausfall der Luftfeder die Karosserie am Fahrwerk durch die Notfeder und die Zusatzfeder abgestützt wird. Bei den bekannten Systemen ist die Notfeder üblicherweise fahrwerksseitig an der Felge kann aber auch davon getrennt angebracht sein. Als Felge wird bei einem Luftfedersystem für ein Schienenfahrzeug üblicherweise die fahrwerksseitige Unterplatte der Luftfederung angesehen.

Es gibt auch Konstruktionen, bei denen keine separate Notfeder vorhanden ist und die Zusatzfeder die Funktion der Notfeder aufnimmt. In diesen Fällen setzt bei Luftausfall dann die Oberplatte bzw. der Luftfederdeckel direkt auf der Felge auf.

Die gelegentlich mit einer gewissen Unschärfe verwendeten Begriffe "Primärfederung / Primärfedersystem" und "Sekundärfederung / Sekundärfedersystem" sind im Grunde sehr einfach wie folgt zu definieren:
- Unter einer "Primärfederung" versteht man bei heutigen Fahrzeugen die erste und grundlegende Federung zwischen der ungefederten Radmasse und dem Fahrgestell bzw. dem Achsträger eines Fahrzeugs. Bei einem PKW oder LKW wird diese Primärfederung durch die federnden Eigenschaften eines Luftreifens bereitgestellt, d.h. der Luftreifen ist die "Primärfeder".

Bei einem Schienenfahrzeug mit Rädern aus Metall ist es demgegenüber erforderlich, die die Radachse mit dem Radsatz aufnehmenden Achsgehäuse gegenüber dem Drehgestell/Fahrgestell mit einer Primärfederung abzufedern. Diese Primärfederung besteht üblicherweise aus material- oder formelastischen Bauteilen, wie etwa Schraubenfedern, Blattfedern, Gummi-Metall-Federn etc. und ist in der Regel zur Federung hochfrequenter Belastungen ausgelegt. Dies ist auch bei modernen Rädern üblich, die zur Reduzierung der Geräuschentwicklung aus einer inneren Radscheibe, einem umgebenden Gummielement und schließlich einem äußeren Radkranz aufgebaut sind.
- Unter einer "Sekundärfederung" versteht man bei Fahrzeugen die Federung zwischen dem Fahrgestell bzw. dem Achsträger eines Fahrzeugs und seiner Karosserie oder seinem Aufbau. Bei PKW und LKW wird diese Sekundärfederung
- durch gedämpfte Stahlfedern, Luftfedern oder Federbeine zwischen Fahrwerk und Karosserie erreicht, bei Schienenfahrzeugen durch das zwischen Fahrgestell, üblicherweise Drehgestell, und Wagenkasten angeordnete Federsystem.

Zurückkommend auf den Aspekt des Zusatzvolumens, durch welches die Federkennung der Luftfeder bzw. des Luftfedersystems verändert wird, zeigen übliche Konstruktionen unter anderem so genannte "Toptanks" im Luftfederdeckel, bei denen oberhalb des Arbeitsraums im Luftfederdeckel ein zusätzliches Luftvolumen zur Verfügung gestellt wird, welches Einfluss auf die vertikalen Federsteifigkeiten des Luftfedersystems hat. Diese Toptanks werden anstatt der Oberplatte montiert. Die Toptanks sind dabei so stabil ausgeführt, dass sie die Aufgaben der Oberplatte übernehmen können, nämlich die Befestigung des Luftfederbalgs und die Verbindung zum Wagenkasten bzw. die Verbindung zu ggf. weiteren Dämpfereinheiten.

Diese Toptanks besitzen in den bekannten Ausführungen ein unveränderliches Luftvolumen und sind als hoch belastetes Verbindungselement als stabile Guss- bzw. Schweißkonstruktionen ausgeführt.

So offenbart die DE202011110308 U1 eine Luftfeder, bei der ein zusätzliches Luftvolumen im Luftfederdeckel ausgebildet ist.

Für die Erfindung bestand die Aufgabe, ein Federsystem für Schienenfahrzeuge als Luftfedersystem bereitzustellen, welches ein für eine komfortable Federung erforderliches Zusatzvolumen aufweist, aber auch unterschiedliche und zuschaltbare Federsteifigkeiten bzw. Federkennungen bereitstellen kann und welches insbesondere auch während des Betriebes eine Veränderung der Federkennung in die eine oder andere Richtung - hart oder weich - ermöglicht.

Gelöst wird diese Aufgabe durch die Merkmale des Hauptanspruchs. Weitere vorteilhafte Ausbildungen sind in den Unteransprüchen offenbart.

Dabei wird das Zusatzvolumen im Luftfederdeckel aus mehreren Einzelvolumina, also etwa einzelnen Kammern im Deckel gebildet, welche über Ventile miteinander und/oder mit dem Arbeits- oder Druckraum verbindbar oder gegeneinander und/oder zum Arbeits- oder Druckraum abschließbar sind.

Durch die erfindungsgemäße Aufteilung des Zusatzvolumens in einzelne Volumina bzw. einzelne Kammern kann die Steifigkeit des Luftfedersystems während der Fahrt bzw. während des Betriebs etwa entsprechend des Beladungszustands und des Streckenprofils angepasst werden. Außerdem wird durch eine solche Anpassung der Federkennung und der dynamischen Eigenschaften des Luftfedersystems die Fahrsicherheit erhöht. So ist neben dem Einfluss auf den Komfort durch die erfindungsgemäße Ausbildung auch eine Erhöhung der Sicherheit gegeben. Da abhängig von der Beladung die Federsteifigkeit anpassbar ist, kann auch unter Beibehaltung gleich hoher Geschwindigkeiten ein sicherer Betrieb erfolgen.

Eine vorteilhafte Weiterbildung besteht darin, dass die Ventile als aktive Stellglieder ausgebildet sind, vorzugsweise als über ein Steuergerät schalt- oder steuerbare Stellglieder

Das gesamte Zusatzvolumen wird also auf einzelne Kammern verteilt, welche mit Hilfe solcher aktiven Stellglieder einzeln verschlossen oder geöffnet werden können, so dass das für die Luftfeder zur Verfügung stehende Luftvolumen, ausgehend vom maximalen oder minimalen Zusatzvolumen, in diskreten Schritten reduziert oder erhöht werden kann.

Eine weitere vorteilhafte Ausbildung besteht darin, dass die Ventile als mit Hilfskraft angetriebene Ventile ausgebildet sind, vorzugsweise als elektromagnetische Steuerventile. Solche Bauteile sind kostengünstig und in jeder gewünschten Ventilart erhältlich und können sehr gut für diese Anwendungen eingesetzt werden. Natürlich können die Ventile auch zum Beispiel als mit Hilfskraft, etwa elektrisch angetriebene Klappenventile, als BIMetall-Ventile oder über Hebelklappen angetriebene Ventile ausgebildet sein.

Eine weitere vorteilhafte Ausbildung besteht darin, dass die Energieversorgung der Ventile durch am Luftfederdeckel vorgesehene Akkumulatoren erfolgt. Dabei können die Akkumulatoren als austauschbare Batterien ausgebildet sein oder auch als induktiv aufladbare Akkumulatoren. Die Energieversorgung durch Akkumulatoren im Deckel vermeidet aufwändige Verkabelung im Fahrwerksbereich.

Eine weitere vorteilhafte Ausbildung in diesem Sinne besteht darin, dass die Ansteuerung der Ventile drahtlos durch Funksignale erfolgt. Auch dadurch erspart man sich Kabelführungen in dem relativ unzugänglichen Bereich der Luftfederung und kann zum Beispiel von einem Fahrstand/Steuerstand aus die Fahrwerke, respektive die Luftfedersysteme, sämtlicher angehängter Wagen eines Zuges in ihrer Federkennung anpassen.

Vorteilhafterweise wird ein solches Federsystem bei einem Schienenfahrzeug eingesetzt, da dort besondere Gewichtsbeschränkungen nicht so sehr zu Buche schlagen und die Deckel der Luftfedern entsprechend stabil und mit mehreren Kammern ausgebildet werden können.

Eine absolute Dichtigkeit der abgetrennten Zusatzvolumina gegeneinander ist dabei nicht unbedingt erforderlich, da geringe Leckströme keinen nennenswerten Einfluss auf die dynamische Federsteifigkeit des Luftfedersystems haben. Die Ansteuerung und Energieversorgung kann natürlich auch über übliche Kabel / Leitungen erfolgen. Auch wäre eine autarke Energieerzeug im Deckel bzw. im Zusammenhang mit Luftströmungen zwischen den Volumina des Toptanks denkbar, etwa durch Impeller im Luftstrom, die Micro-Generatoren antreiben.

Anhand eines Ausführungsbeispiels soll die Erfindung näher erläutert werden. Es zeigen
- Fig. 1: prinzipiell den vorderen Teil eines schienengebundenen Kurzstreckentriebwagens mit einem erfindungsgemäßen Luftfedersystem,
- Fig. 2: prinzipiell das erfindungsgemäße Luftfedersystem im Detail.

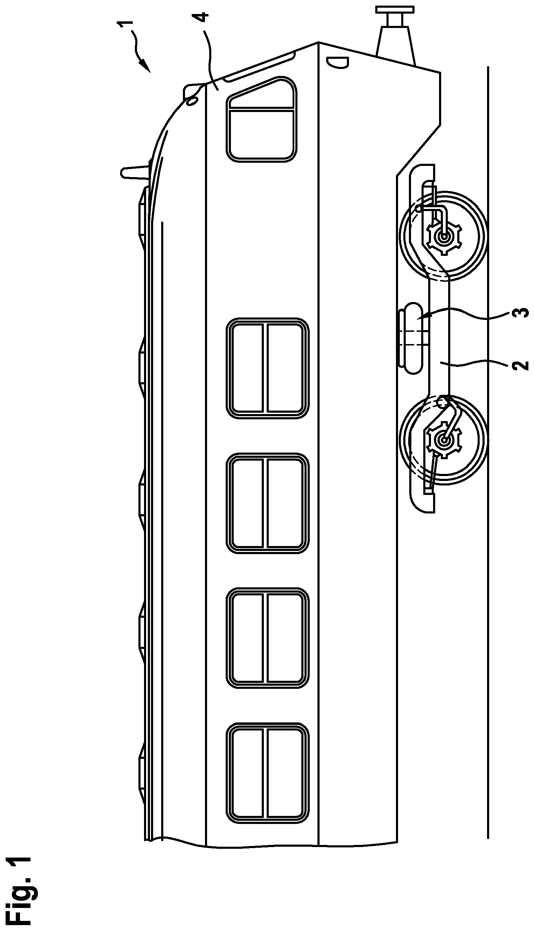

Fig. 1 zeigt prinzipiell den vorderen Teil eines schienengebundenen Kurzstreckentriebwagens 1 mit einen Fahrschemel bzw. Fahrgestell 2, welches über ein Luftfedersystem 3 mit der Karosserie 4 des Triebwagens 1 verbunden ist. Das Luftfedersystem 3 stellt hier das Sekundärfedersystem dar.

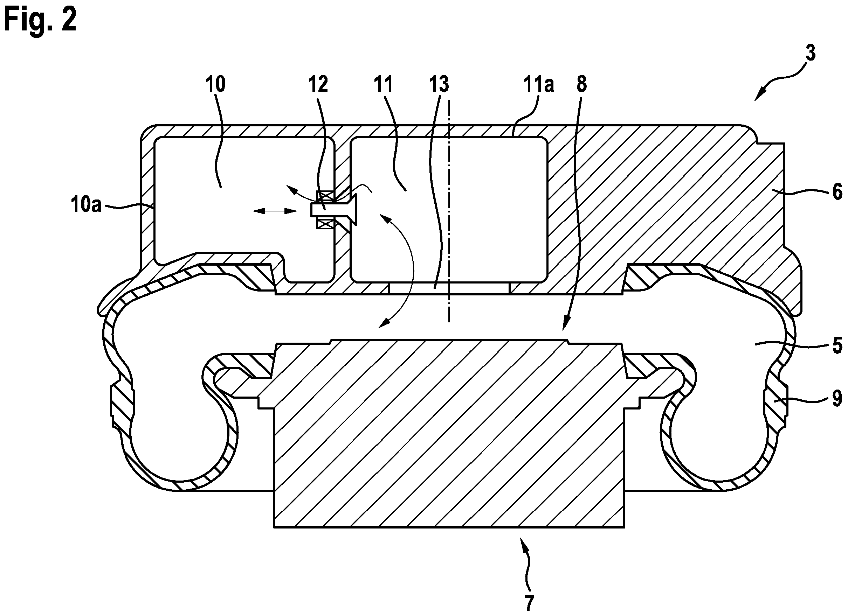

Fig. 2 zeigt vergrößert das erfindungsgemäß ausgebildete Luftfedersystem 3 in seinen wesentlichen Teilen. Das Luftfedersystem 3 weist einen das Federvolumen bildenden Arbeits- oder Druckraum 5 auf, welcher von einem karosserieseitigem Luftfederdeckel 6, einer fahrwerkseitigen Anschlußkörper 7 mit der Felge 8 und einem zwischen Luftfederdeckel und Felge angeordnetem Luftfederbalg 9 begrenzt ist.

Der Anschlusskörper 7 ist in seiner Konstruktion hier nicht weiter detailliert dargestellt und kann auf verschiedene Arten ausgebildet werden, z. B. eine Zusatzfeder aus Gummi aufweisen oder auch eine Notfeder beinhalten.

Im Luftfederdeckel 6 ist ein mit dem Arbeits- oder Druckraum 5 zusammenwirkend verbindbares Zusatzvolumen ausgebildet, welches erfindungsgemäß aus mehreren Einzelvolumina gebildet wird, hier aus zwei die Einzelvolumina 10 und 11, die innerhalb Hohlkammern 10a und 11a entstehen.

Die Einzelvolumina 10 und 11 sind über das elektromagnetisch betätigbare Ventil 12 miteinander verbindbar oder gegeneinander abschließbar. Die zugehörigen Kabel und Leitungen für die Energieversorgung des Magnetventils sind hier nicht näher dargestellt, die Steuerung des Magnetventils erfolgt drahtlos.

Die Verbindung der Einzelvolumina 10 und 11 zum Arbeits- oder Druckraum 5 ist in dieser Ausführung so gestaltet, dass das Einzelvolumen 11 als Zusatzvolumen über die Öffnung 13 permanent mit dem Arbeitsvolumen verbunden ist, wobei das Einzelvolumen 10 über das Magnetventil 12 zunächst mit dem Zusatzvolumen 11 und darüber mit dem Arbeits- oder Druckraum verbindbar ist. In diesem Fall ist also ein permanent zugeschaltetes Einzelvolumen 11 vorgesehen, welches zur Anpassung auf Streckenverhältnisse oder Beladungszustand mit einem weiteren Einzelvolumen 10 als Zusatzvolumen vergrößert werden kann.

Selbstverständlich ist es auch möglich, die Öffnung 13 ebenfalls mit einem Magnetventil zu versehen, so dass im Normalbetrieb kein Zusatzvolumen vorhanden ist und je nach Anforderung während des Betriebes zunächst ein erstes und/oder dann ein zweites Zusatzvolumen oder auch beide Volumina separat oder abwechselnd zugeschaltet werden können.

### Bezugszeichenliste

### (Teil der Beschreibung)

- 1: Kurzstreckentriebwagen
- 2: Fahrschemel / Fahrgestell
- 3: Luftfedersystem
- 4: Karosserie
- 5: Arbeits- oder Druckraum
- 6: Luftfederdeckel
- 7: Anschlußkörper
- 8: Felge
- 9: Luftfederbalg
- 10: Zusatzvolumen / Einzelvolumen
- 10a: Hohlkammer im Luftfederdeckel
- 11: Zusatzvolumen / Einzelvolumen
- 11a: Hohlkammer im Luftfederdeckel
- 12: Magnetventil
- 13: Öffnung

## Patentansprüche

1. Luftfedersystem (3) für ein Schienenfahrzeug ( 1), anordenbar als Sekundärfedersystem zwischen einem Wagenkasten (4 ) und einem Fahrwerk bzw. Fahrgestell (2), , mit einem ein Federvolumen bildenden Arbeits- oder Druckraum (5), welcher von einem karosserieseitigem Luftfederdeckel (6 ), einer fahrwerkseitiger Felge (7) und einem zwischen Luftfederdeckel und Felge angeordnetem Luftfederbalg (9) begrenzt ist, wobei im Luftfederdeckel (6 ) ein mit dem Arbeits- oder Druckraum zusammenwirkend verbindbares Zusatzvolumen ausgebildet ist, **dadurch gekennzeichnet, dass** das Zusatzvolumen im Luftfederdeckel (6 ) aus mehreren Einzelvolumina (10, 11) gebildet wird, welche über Ventile (12) miteinander und/oder mit dem Arbeits- oder Druckraum (5) verbindbar oder gegeneinander und/oder zum Arbeits- oder Druckraum (5) abschließbar sind.

2. Luftfedersystem nach Anspruch 1, bei dem die Ventile (12) als aktive Stellglieder ausgebildet sind, vorzugsweise als über ein Steuergerät schalt- oder steuerbare Stellglieder.

3. Luftfedersystem nach Anspruch 1 oder 2, bei dem die Ventile (12) als mit Hilfskraft angetriebene Ventile ausgebildet sind, vorzugsweise als elektromagnetische Steuerventile.

4. Luftfedersystem nach einem der Ansprüche 1 bis 3, bei dem die Energieversorgung der Ventile (12) durch am Luftfederdeckel (6) vorgesehene Akkumulatoren erfolgt.

5. Luftfedersystem nach einem der Ansprüche 2 bis 4, bei dem die Ansteuerung der Ventile (12) drahtlos durch Funksignale erfolgt.

6. Schienenfahrzeug mit einem Luftfedersystem nach Anspruch 1 bis 5.

## Claims

1. Air spring system (3) for a rail vehicle (1), which can be arranged as a secondary spring system between a wagon body (4) and a chassis or running gear (2), with a working or pressure space (5) which forms a spring volume and is delimited by a vehicle body-side air spring cover (6), a chassis-side bead plate (7) and an air spring bellows (9) which is arranged between the air spring cover and the bead plate, an additional volume which can be connected to the working or pressure space so as to interact with it being configured in the air spring cover (6), **characterized in that** the additional volume in the air spring cover (6) is formed from a plurality of individual volumes (10, 11) which, via valves (12), can be connected to one another and/or to the working or pressure space (5) and/or can be closed off with respect to one another and/or with respect to the working or pressure space (5).

2. Air spring system according to Claim 1, in the case of which the valves (12) are configured as active actuators, preferably as actuators which can be switched or controlled via a control unit.

3. Air spring system according to Claim 1 or 2, in the case of which the valves (12) are configured as valves which are driven by way of auxiliary force, preferably as electromagnetic control valves.

4. Air spring system according to one of Claims 1 to 3, in the case of which the energy supply of the valves (12) takes place by way of rechargeable batteries which are provided on the air spring cover (6).

5. Air spring system according to one of Claims 2 to 4, in the case of which the actuation of the valves (12) takes place wirelessly by way of radio signals.

6. Rail vehicle with an air spring system according to Claims 1 to 5.

## Revendications

1. Système de suspension pneumatique (3) destiné à un véhicule ferroviaire (1) et pouvant être disposé en tant que système de suspension secondaire entre une superstructure (4) et un mécanisme de roulement ou un boggie (2), ledit système comprenant une chambre de travail ou de pression (5) qui forme un volume de suspension et qui est délimitée par un couvercle de suspension pneumatique côté carrosserie (6), une jante (7) côté mécanisme de roulement et un soufflet de suspension pneumatique (9) disposé entre le couvercle de suspension pneumatique et la jante, un volume supplémentaire qui peut être relié de manière coopérative à la chambre de travail ou de pression étant formé dans le couvercle de suspension pneumatique (6),
**caractérisé en ce que** le volume supplémentaire dans le couvercle de suspension pneumatique (6) est formé de plusieurs volumes individuels (10, 11) qui peuvent être reliés entre eux et/ou à la chambre de travail ou de pression (5), ou qui peuvent être fermés les uns par rapport aux autres et/ou par rapport à la chambre de travail ou de pression (5), par des vannes (12).

2. Système de suspension pneumatique selon la revendication 1, les vannes (12) étant conçues comme des actionneurs actifs, de préférence comme des actionneurs commutables ou commandables par le biais d'une unité de commande.

3. Système de suspension pneumatique selon la revendication 1 ou 2, les vannes (12) étant conçues comme des vannes entraînées avec une force auxiliaire, de préférence comme des vannes de commande électromagnétiques.

4. Système de suspension pneumatique selon l'une des revendications 1 à 3, dans lequel l'alimentation en énergie des vannes (12) est effectuée par des accumulateurs prévus au niveau du couvercle de suspension pneumatique (6).

5. Système de suspension pneumatique selon l'une des revendications 2 à 4, dans lequel la commande des vanne (12) est effectuée sans fil par des signaux radio.

6. Véhicule ferroviaire comprenant un système de suspension pneumatique selon les revendications 1 à 5.
